# EUROPÄISCHE PATENTSCHRIFT

(11) **EP 0 814 611 B1**
(45) Veröffentlichungstag und Bekanntmachung des Hinweises auf die Patenterteilung: **28.08.2002**
(21) Anmeldenummer: 97108926.3
(22) Anmeldetag: 03.06.1997
(51) Int. Cl.: H04N 7/14, H04N 1/00

(54) **Kommunikationssystem und Verfahren zur Aufnahme und Verwaltung digitaler Bilder**
Communication system and method for recording and managing digital images
Méthode et système de communication pour l'enregistrement et la gestion d'images numériques

(30) Priorität: 17.06.1996 DE 19624128
(43) Veröffentlichungstag der Anmeldung: 29.12.1997
(73) Patentinhaber: SIEMENS AKTIENGESELLSCHAFT, 80333 München (DE)
(72) Erfinder: Mattes, Heinz, Dr., 81739 München (DE)

(56) Entgegenhaltungen:
- EP-A- 0 624 968
- WO-A-97/05738
- FR-A- 2 646 039
- PATENT ABSTRACTS OF JAPAN vol. 018, no. 428 (E-1591), 10. August 1994 (1994-08-10) & JP 06 133081 A (KYOCERA CORP), 13. Mai 1994 (1994-05-13)
- PATENT ABSTRACTS OF JAPAN vol. 018, no. 675 (E-1648), 20. Dezember 1994 (1994-12-20) & JP 06 268582 A (KONICA CORP), 22. September 1994 (1994-09-22)

## Beschreibung

In dem Bereich der Telekommunikation werden verschiedenste Arten von Daten von einem Sender zu einem Empfänger unidirektional oder bidirektional übertragen. Die übertragenen Daten können beispielsweise Sprachsignale, Bildsignale, oder auch in digitale Signale umgewandelte Schriftzeichen sein. Zur Übertragung gesprochener Daten in Kombination mit Bilddaten und/oder Schriftzeichen werden sogenannte Videokonferenzsystem bzw. Systeme zum Application-Sharing eingesetzt. Diese Systeme benötigen jedoch sowohl bei dem Sender als auch bei dem Empfänger eine leistungsfähige, teure und voluminöse Rechneranordnung mit einer externen Videokamera.

Eine digitale Bildkamera ist beispielsweise aus dem Dokument [1] bekannt.

Ferner ist ein Nachrichtenübertragungssystem beispielsweise aus dem Dokument [2] bekannt.

Aus dem Dokument [3] ist eine Anordnung mit einer TV-Kamera und einem Telefon bekannt, bei dem Audiodaten und Bilddaten gemeinsam über eine Telefonleitung gesendet werden.

Mit dieser aus dem Dokument [3] bekannten Anordnung ist es möglich, auch einzelne Standbilder, beispielsweise Photographien, zu digitalisieren, zu komprimieren und zu übertragen.

Werden jedoch eine erhöhte Anzahl von digitalen Bildern aufgenommen, und sollen diese beispielsweise in einer zentralen Rechnereinheit archiviert werden, so tritt das Problem der Datenhaltung und insbesondere der Datenauffindung der Bilddaten in steigendem Maße mit steigender Anzahl zu archivierender Bilder auf.

Sogenannte Parser sind aus dem Dokument [4] bekannt.

Aus [5] ist ein Bild- und Audio-Kommunikationssystem mit der Fähigkeit zu grafischen Anmerkungen bekannt, bei dem ein Telefonapparat die annähernd gleichzeitige Übertragung und den Empfang von Audiosignalen zeitlich ineinander verzahnt mit Bild- und grafischen Anmerkungssignalen ermöglicht, wobei die Daten in Paketform vorliegen und über eine analoge Übertragungsstrecke gesendet werden, die sie im Telefonapparat mit einem Telefonnetz verbindet. Hierbei werden die Audio-Datenpakete periodisch während eines ersten Zeitintervalls und die Bild- und Anmerkungs-Datenpakete während eines zweiten Zeitintervalls übertragen, das auf das erste Zeitintervall folgt und eine gleichzeitige Ausgabe von Stimm-, Bild- und Anmerkungsdaten auf der Empfängerseite ermöglicht. Das Kommunikationssystem weist ein neuartiges Speichermanagement mit einem vereinheitlichten Dateiformat auf. Das vereinheitliche Dateiformat beinhaltet ein Datenspeicherkopffeld, das Felder beinhaltet, die das Gesamtbild identifizieren und unter anderem komprimierte Grafikanmerkungen und zugehörige komprimierte Audiodaten. Ein solches Kopffeld eines Datenpakets enthält eine Reihe von Parametern, z.B. zur Charakterisierung der Art und Größe eines Bildes.

Aus [6] ist eine Schaltungsanordnung zur Sprach-, Daten- und Bildkommunikation bei der Benutzung von Telefonanlagen bekannt. Mit der Schaltungsanordnung wird erreicht, Stand-/und/oder Bewegtbilder während einer Sprach- und Datenkommunikation auf dem Bildschirm eines PCs parallel zu den angezeigten Daten einzuspielen.

Aus [7] ist ein System mit digitaler Kamera und einer drahtgebundenen Übertragung aufgenommener Bilddaten bekannt, bei dem den aufgenommenen Bilddaten charakterisierende Daten hinzugefügt werden, wobei die zu übertragenden und entfernt empfangenen Bilddaten entsprechend mit mitübertragenen charakterisierenden Daten in einer Datenbank gespeichert werden.

Somit liegt der Erfindung das Problem zugrunde, ein Kommunikationssystem zur Aufnahme und Verwaltung digitaler Bilder zu schaffen, bei dem die Verwaltung und Archivierung digitaler Bilder einfach, schnell und übersichtlich durchgeführt wird. Ferner liegt der Erfindung das Problem zugrunde, ein Verfahren zur Aufnahme und Verwaltung digitaler Bilder anzugeben, mit dem eine einfache, schnelle und übersichtliche Archivierung von digitalen Bildern möglich wird.

Die Probleme werden durch das Kommunikationssystem gemäß Patentanspruch 1 sowie durch das Verfahren gemäß Patentanspruch 15 gelöst.

Das Kommunikationssystem enthält mindestens eine Telefoneinheit, einen Server sowie ein Übertragungssystem zur Übertragung von Daten von der Telefoneinheit zu dem Server. Dabei enthält die Telefoneinheit mindestens eine digitale Bildaufnahmeeinheit, die die Funktionalität einer digitalen Kamera aufweist, einen Telefonspeicher zur Speicherung digitaler Bilder, eine Recheneinheit zur Verarbeitung digitaler Bilder, sowie Mittel zum Senden digitaler Bilder einschließlich diesen zugeordneter Ordnungsmerkmale über ein übertragungssystem. Ferner weist der Server eine Empfangseinheit, eine Analyseeinheit zur Analyse der Daten, die von der Telefoneinheit gesendet werden, bezüglich Ordnungsmerkmalen, sowie einen Speicher zur Speicherung der digitalen Bilder auf. Bei der Speicherung werden die Ordnungsmerkmale, die jeweils die digitalen Bilder charakterisieren, berücksichtigt.

Erfindungsgemäß enthalten die Ordnungsmerkmale mindestens die Telefonnummer der Telefoneinheit und/oder die Telefonnummer des Servers.

Das Kommunikationssystem weist eine Vielzahl von Vorteilen auf. Außer der bei üblichen Telefonsystemen übertragenen Sprache können mit diesem Kommunikationssystem auch Standbilder, also Photographien, übertragen werden. Die übertragenen Daten enthalten mindestens die mit der Telefoneinheit aufgenommenen digitalen Bilder. Aus den Daten werden Ordnungsmerkmale in der Analyseeinheit extrahiert und dazu verwendet, die digitalen Bilder in einer Weise zu speichern, daß diese leicht wiederauffindbar sind, auch bei einer großen Anzahl zu speichernder und zu verwaltender digitaler Bilder. Auf diese Weise ist es möglich, eine automatische Archivierung der digitalen Bilder in dem Server durchzuführen. Dadurch, daß die Speicherung abhängig von extrahierten Ordnungsmerkmalen, die die einzelnen digitalen Bilder charakterisieren, erfolgt, wird eine einfache, schnelle, übersichtliche Archivierung digitaler Bilder automatisch durchgeführt.

Die oben beschriebenen Vorteile des Kommunikationssystems gelten ebenso für das Verfahren zur Aufnahme und Verwaltung digitaler Bilder, bei dem Bilder aufgenommen werden und in digitaler Form als digitale Bilder gespeichert werden. Daten werden von der Telefoneinheit zu dem Server übertragen, wobei in den Daten mindestens die digitalen Bilder enthalten sind. In dem Server werden Ordnungsmerkmale, die die digitalen Bilder charakterisieren, extrahiert und die digitalen Bilder werden unter Berücksichtigung der Ordnungsmerkmale in dem Server gespeichert.

Vorteilhafte Weiterbildungen des Kommunikationssystems sowie des Verfahrens ergeben sich aus den abhängigen Ansprüchen.

Durch die Weiterbildung des Kommunikationssystems in einer Weise, daß die Telefoneinheit mit dem Übertragungssystem drahtlos gekoppelt ist, und somit eine mobile Telefoneinheit gegeben ist, ist es möglich, die Bild-/Sprachinformation unmittelbar an jedem beliebigen Ort aufzunehmen und zur Verfügung zu stellen und somit ohne Zeitverlust in vervielfältigter Form weiter zu verteilen.

Ferner ist es vorteilhaft, im Rahmen des Kommunikationssystems ein Mittel zur Zuordnung von Ordnungsmerkmalen vorzusehen, die von einem Benutzer vorgebbar sind und die den digitalen Bildern zugeordnet werden. Entsprechend ist es für das Verfahren in einer Weiterbildung vorteilhaft, den digitalen Bildern vom Benutzer vorgebbare Ordnungsmerkmale zuzuordnen. Diese Vorgehensweise bzw. diese Ausgestaltung des Kommunikationssystems weist vor allem den Vorteil auf, daß zusätzliche Information zu dem aufgenommenen Bild direkt von demjenigen, der die Aufnahme des Bildes durchführt, zum Zeitpunkt der Aufnahme hinzufügen kann. Damit wird eine zusätzliche, auf Seiten des Servers unter Umständen notwendige zusätzliche Informationsaufbereitung für die digitalen Bilder vermieden. Ferner ist ein Vorteil dieser Ausgestaltung darin zu sehen, daß derjenige, der die Aufnahme des Bildes durchführt, die Information, die die jeweiligen Bilder am besten beschreiben, am besten versteht und den Bildern zuordnen kann.

Durch die Weiterbildung des Kommunikationssystems um eine Spracherkennungseinheit in der Telefoneinheit wird eine zusätzliche Komprimierung der zu übertragenden Daten erreicht, da die Audioinformation weiter komprimiert wird.

In verschiedenen Ausgestaltungen des Kommunikationssystems können die Ordnungsmerkmale unterschiedliche Ausgestaltungen und somit unterschiedlichen Informationsgehalt aufweisen. So ist es in einer Weiterbildung vorteilhaft, daß die Ordnungsmerkmale Audiodaten aufweisen. Damit wird eine sehr einfache, benutzerfreundliche Archivierung erreicht, da der Benutzer lediglich zu dem aufgenommenen Bild wie bei einem Telefongespräch Information in die Telefoneinheit einsprechen muß. Ferner ist es in einer Weiterbildung vorgesehen, daß auch andere Formen von Audiodaten als Ordnungsmerkmale vorgesehen sind. Diese können beispielsweise in spezifischen, die Bilddaten charakterisierenden Geräuschen oder auch in einer frei auswählbaren Musik zu sehen sein.

In einer weiteren Ausgestaltung ist es vorgesehen, das Datum und/oder die Uhrzeit der Aufnahme des Bildes und/oder des Sendezeitpunkts der Daten als Ordnungsmerkmale zu verwenden. Durch diese Weiterbildungen können in dem Server die Ordnungsmerkmale auf sehr einfache Weise extrahiert werden und direkt in die Information, an welcher Stelle des Speichers die digitalen Bilder gespeichert werden sollen, umgesetzt werden. Diese Umsetzung kann beispielsweise dadurch erfolgen, daß in dem Server die empfangenen digitalen Bilder in Verzeichnissen gespeichert werden, die sich beispielsweise nach den mitgesendeten Zeitpunkten der Aufnahme oder des Sendens der digitalen Bilder gliedern.

Eine weitere vorteilhafte Ausgestaltung ist darin zu sehen, als Ordnungsmerkmal eine andere Identifikationsangabe der Telefoneinheit oder des Servers als Ordnungsmerkmale zu verwenden.

Ferner ist es in einer Weiterbildung vorteilhaft, daß die Ordnungsmerkmale direkt die Angabe enthalten, an welcher Stelle des Speichers die digitalen Bilder abgespeichert werden sollen. Diese Angabe kann beispielsweise durch direkte Pfadangabe des Verzeichnisses, in das das digitale Bild in dem Server gespeichert werden soll, erfolgen. Durch diese Weiterbildung wird die Analyse der Ordnungsmerkmale erheblich vereinfacht, wodurch das Verfahren erheblich schneller durchführbar ist und das Kommunikationssystem mit geringerem Hardwareaufwand realisiert werden kann.

Zur Verbesserung des Verhältnisses zwischen der benötigten Bildqualität und der benötigten Datenübertragungsrate in dem Übertragungssystem ist es vorteilhaft, in dem Server eine Bildanalyseeinheit zur Ermittlung der Qualität der digitalen Bilder vorzusehen. Ist die benötigte Qualität höher als die gelieferte, so kann eine höhere Bildauflösung der digitalen Bilder in einer weiteren Ausgestaltung von der Telefoneinheit angefordert werden. Ist jedoch die Bildqualität gegenüber der eigentlich benötigten Bildqualität in dem Server höher als benötigt, so kann eine geringere Datenübertragungsrate eingestellt werden und von der Telefoneinheit digitale Bilder mit geringerer Qualität angefordert werden. Somit läßt sich die benötigte Übertragungsrate und auch die damit verbundenen Kosten zur Übertragung der digitalen Bilder reduzieren.

Ein Ausführungsbeispiel der Erfindung ist in den Figuren dargestellt und wird im weiteren näher erläutert.

Es zeigen
- Fig. 1: eine Skizze des erfindungsgemäßen Kommunikationssystems mit einer Vielzahl von Telefoneinheiten;
- Fig. 2: eine Skizze einer Telefoneinheit in dem Kommunikationssystem mit einigen Weiterbildungen des Kommunikationssystems;
- Fig. 3: ein Ablaufdiagramm, in dem die Verfahrensschritte des erfindungsgemäßen Verfahrens dargestellt sind;
- Fig. 4: ein Blockdiagramm, in dem die verschiedenen Ordnungsmerkmale dargestellt sind.

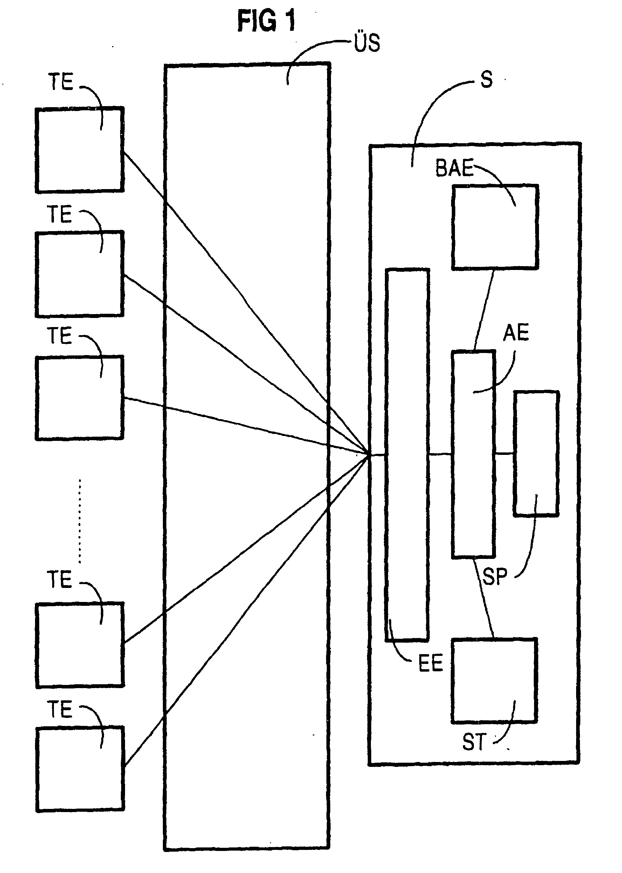

Das Kommunikationssystem weist mindestens folgende Komponenten auf, die in Fig. 1 dargestellt sind:
- Eine beliebige Anzahl von Telefoneinheiten TE;
- ein Übertragungssystem ÜS, welches sowohl mit den Telefoneinheiten TE als auch mit einem Server S gekoppelt ist und zur Übertragung von Daten zwischen den Telefoneinheiten TE und dem Server S eingesetzt wird;
- den Server S.

Der Server S ist eine Rechneranordnung, der mindestens zur Datenhaltung einer größeren Anzahl digitaler Bilder und zusätzlich eventuell den digitalen Bildern zugeordneter Ordnungsmerkmale OM dient.

Der Server S weist mindestens folgende Komponenten auf:
- Eine Empfangseinheit EE zum Empfangen von Daten, die von der mindestens einen Telefoneinheit TE über das Übertragungssystem ÜS gesendet werden;
- eine Analyseeinheit AE, die mit der Empfangseinheit EE gekoppelt ist, in der aus den empfangenen Daten Ordnungsmerkmale extrahiert werden. Verschiedene Realisierungsmöglichkeiten für die Analyseinheit AE werden im weiteren beschrieben.
- Ferner ist in dem Server S ein Speicher SP zur Speicherung der Daten sowie der digitalen Bilder, die in den Daten enthalten sind, vorgesehen.

In einer Weiterbildung ist in dem Server S eine Bildanalyseeinheit BAE vorgesehen, mit dem die Qualität eines digitalen Bildes ermittelt wird. Dabei wird in der Bildanalyseeinheit BAE beispielsweise das Rauschen innerhalb des digitalen Bildes ermittelt, und abhängig von dem Rauschen die Qualität des Bildes abgeschätzt.

Ferner ist in einer Weiterbildung des Kommunikationssystems in dem Server S eine Steuereinheit ST vorgesehen. Die Steuereinheit ST dient beispielsweise zur Steuerung der Bildauflösung der digitalen Bilder, wie sie in der mindestens einen Telefoneinheit TE zur Bildkomprimierung verwendet wird. Ein Steuerparameter zur Einstellung der Bildkomprimierung von digitalen Bildern liegt beispielsweise bei bekannten Komprimierverfahren wie JPEG in der Steuerung des Quantisierungsfaktors bei der Biiddatenkompression.

Ferner dient die Steuereinheit ST zur Steuerung der Übertragungsrate während der Übertragung der Daten über das Übertragungssystem ÜS.

In einer weiteren Ausgestaltung des Kommunikationssystems ist in der Analyseeinheit AE ein Mittel zur Analyse von Sprachsignalen vorgesehen (nicht dargestellt), aus denen Teile der Ordnungsmerkmale OM extrahiert werden. Ebenso ist in dem Server S in einer Ausgestaltung eine Sprachsyntheseeinheit (nicht dargestellt) vorgesehen. Über die Sprachsyntheseeinheit kann digital gespeicherte Sprachinformation zu Sprache umgewandelt werden, die einem Benutzer des Server S nunmehr in natürlicher Sprache dargestellt werden kann.

Der Server S kann zur Verwaltung der digitalen Bilder, wie sie im weiteren beschrieben wird, beispielsweise als ein beliebiges Datenbanksystem ausgestaltet sein. Die Funktionsweise der Analyseeinheit AE wird im Rahmen der Beschreibung des Verfahrens detailliert dargelegt.

Im weiteren wird ohne Einschränkung der Allgemeingültigkeit zur besseren Darstellbarkeit das Kommunikationssystem mit nur noch einer Telefoneinheit TE beschrieben.

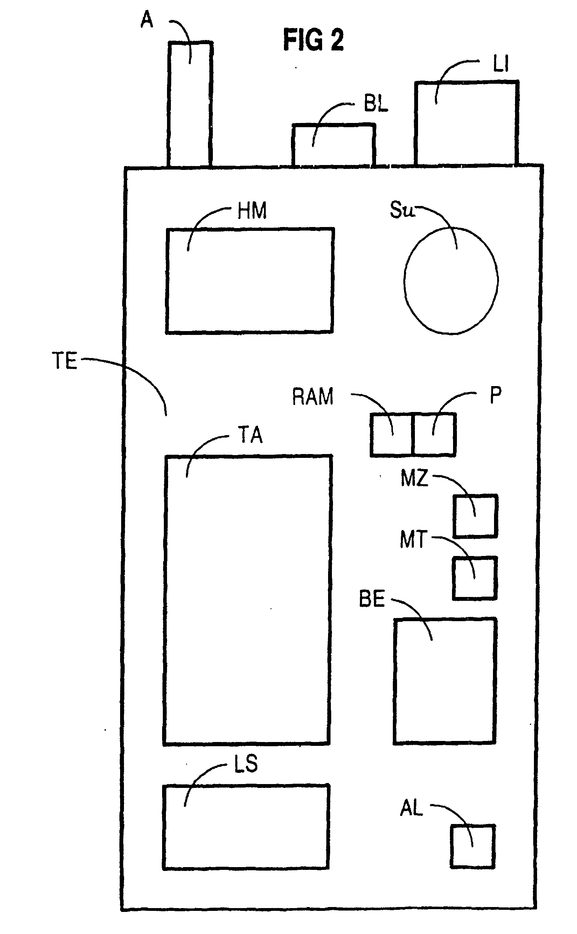

Die Telefoneinheit TE ist in Fig. 2 mit einigen Details dargestellt.

Die Telefoneinheit weist die üblichen Merkmale einer Telefoneinheit TE, beispielsweise eine Hörmuschel HM, eine Tastatur TA als Bedienfeld der Telefoneinheit TE sowie einen Lautsprecher LS auf.

Ferner ist in die Telefoneinheit TE eine digitale Bildaufnahmeeinheit zur Aufnahme von Bildern integriert. Dies ist symbolisch in Fig. 2 durch eine Linse LI und ein eventuell vorgesehenes Blitzlicht BL sowie einen Sucher SU angedeutet.

Es ist in einer Alternative vorgesehen, daß die Bildaufnahmeeinheit und die Telefoneinheit voneinander räumlich getrennt angeordnet sind, jedoch über eine Verbindung, z.B. eine Leitung (Leitungsverbindung), eine Steckverbindung oder eine Funkverbindung, miteinander verbunden sind.

Die digitale Bildaufnahmeeinheit weist die Funktionalität beispielsweise einer aus dem Dokument [2] bekannten digitalen Fotokamera auf. Die digitale Bildaufnahmeeinheit ist derart ausgestaltet, daß die Funktionalität einer Digitalkamera gewährleistet wird. Ferner ist ein Telefonspeicher TS zur Speicherung mindestens der von der digitalen Bildaufnahmeeinheit aufgenommenen Bilder, die in digitaler Form als digitale Bilder aufgenommen werden, in der Telefoneinheit TE vorgesehen. Zur Kompression der digitalen Bilder können beliebige Standbild-Bilddatenkompressionsverfahren, beispielsweise JPEG, eingesetzt werden. Ferner ist eine Recheneinheit vorgesehen, welche mindestens einen Prozessor P aufweist, mit dem beispielsweise die Kompressionsverfahren durchgeführt werden, sowie einen Speicher RAM. Allgemein dient die Recheneinheit mindestens zur Verarbeitung digitaler Bilder. Sie kann aber, wie in den Weiterbildungen auch beschrieben, für weitere Rechenaufgaben, beispielsweise zur Mustererkennung oder auch zur Spracherkennung innerhalb der Telefoneinheit TE eingesetzt werden.

Da die Telefoneinheit TE sowohl als "normales Telefon" als auch als Bildaufnahmegerät mit erweiterter Funktionalität eingesetzt werden kann, ist es in einer Weiterbildung der Erfindung eine Modustaste MT vorgesehen, mit der angezeigt wird bzw. mit der eingestellt werden kann, in welchem Modus die Telefoneinheit TE betrieben wird, entweder als "normales Telefon" oder im Rahmen des Kommunikationssystems.

Ferner ist in der Telefoneinheit TE in einer Weiterbildung ein separater Auslöser AL für die Aufnahme der Bilder durch die digitale Bildaufnahmeeinheit vorgesehen.

Auch ist für eine im weiteren beschriebene Funktionalität der Zuordnung von Sprache, die von dem Benutzer eingesprochen wird, zu den einzelnen digitalen Bildern, ein Bedienfeld BE für diese Betriebsart vorgesehen. Anschaulich bedeutet diese Funktionalität, daß die Telefoneinheit temporär als eine Art "Diktiergerät", deren Steuerung über das Bedienfeld BE erfolgt, betrieben wird. Die im vorigen beschriebenen Elemente, die Modustaste MT, der Auslöser AL sowie das Bedienfeld BE müssen jedoch nicht als separate Tasten ausgestaltet sein, sondern können beispielsweise über Tastenkombinationen in der Tastatur TA der Telefoneinheit TE in ihrer jeweiligen Funktionalität integriert sein.

Da die Telefoneinheit TE sowohl über Leitungen, also drahtgebunden, oder auch drahtlos, also als ein Mobiltelefon ausgestaltet sein kann, ist für den Fall, daß die Telefoneinheit TE als Mobiltelefon oder auch als schnurloses Telefon ausgestaltet ist, eine Antenne A vorgesehen.

Ferner ist in der Telefoneinheit TE ein Mittel MZ zur Zuordnung von Ordnungsmerkmalen OM vorgesehen, die den digitalen Bildern zugeordnet werden und die die digitalen Bilder charakterisieren. Das Mittel MZ kann in seiner Funktionalität auch über beispielsweise Tastenkombinationen in seiner Funktionalität in der Tastatur TA integriert sein.

Ferner ist in einer Ausgestaltung eine Spracherkennungseinheit (nicht dargestellt) in der Telefoneinheit TE vorgesehen.

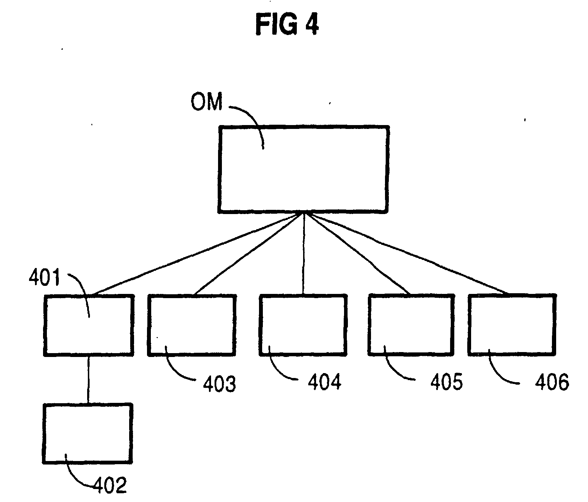

In Fig. 4 sind verschiedene Möglichkeiten für die Ordnungsmerkmale OM dargestellt. Die Ordnungsmerkmale OM sind jeweils den digitalen Bildern eindeutig zugeordnet und charakterisieren die digitalen Bilder. Unter den Ordnungsmerkmalen OM sind beispielsweise folgende, nicht als ausschließlich zu verstehende Informationen zu verstehen. Die Ordnungsmerkmale OM dienen, wie im weiteren beschrieben wird, zur übersichtlichen, eindeutigen Speicherung der digitalen Bilder in dem Server S in einer Weise, daß die digitalen Bilder schnell wiederauffindbar sind.

Ordnungsmerkmale OM können beispielsweise in dem digitalen Bild selbst implizit enthalten sein, beispielsweise in einer bestimmten Semantik des Bildinhalts, beispielsweise in bestimmten Gebäuden, in einer bestimmten aufgenommenen Landschaft, oder auch in einem bestimmten, aufgenommenen Fahrzeugtyp. Entsprechend der aufgenommenen Semantik muß die Analyseeinheit AE zur Analyse der Bildsemantik ausgestaltet sein. Sind Ordnungsmerkmale OM implizit in dem digitalen Bild enthalten, so ist die Analyseeinheit AE als eine Mustererkennungseinheit ausgestaltet, die nach bestimmten, vorgegebenen Merkmalen in dem digitalen Bild "sucht".

Erfindungsgemäß sind die Ordnungsmerkmale OM auch in den übertragenen Daten, die die digitalen Bilder enthalten, enthalten. Die Ordnungsmerkmale enthalten beispielsweise die Adresse oder auch Telefonnummer der die Daten sendenden Telefoneinheit TE. Ferner kann auch die Information über das Datum und/oder die Uhrzeit des Aufnahmezeitpunktes des jeweiligen digitalen Bildes und/oder des Sendens des digitalen Bildes zu dem Server S in den Daten enthalten sein. Ist dies der Fall, so ist die Analyseeinheit AE derart ausgestaltet, daß diese Informationen aus den Daten extrahiert werden kann. Dies entspricht beispielsweise einer einfachen Analyse des sog. Kopffeldes (Header) der übertragenen Nachricht, die die Daten enthält.

Allgemein können die Ordnungsmerkmale OM beispielsweise die folgenden Typen von Daten enthalten:
- Beliebige Formen von Audiodaten 401, beispielsweise Melodien, Lieder, Geräusche oder auch von dem Benutzer in die Telefoneinheit TE eingesprochene Sprache 402,
- die Uhrzeit und/oder das Datum der Aufnahme des Bildes und/oder die Uhrzeit und/oder das Datum des Sendens der Daten 403,
- die Telefonnummer der Telefoneinheit TE und/oder die Telefonnummer des Servers S 404 oder eine andere Art der Identifikation der Telefoneinheit TE und/oder des Server S, beispielsweise eine eindeutige Adresse der Telefoneinheit TE oder des Server S;
- mindestens eine Angabe, an welcher Stelle des Speichers die digitalen Bilder abgespeichert werden sollen 405. Dies könnte beispielsweise durch eine eindeutige Pfadangabe erfolgen, durch die angegeben wird, an welcher Stelle des Verzeichnisses innerhalb des Server S das jeweilige digitale Bild abgespeichert werden soll;
- weitere Alphanumerische Daten, die beispielsweise über die Tastatur TA in die Telefoneinheit TE eingegeben werden, beispielsweise in dem sogenannten ASCII-Format 406.

Entsprechend der Art der Ordnungsmerkmale OM muß natürlich die Analyseeinheit AE ausgestaltet sein, daß die Analyseeinheit AE in der Lage ist, die Ordnungsmerkmale OM aus den Daten zu extrahieren. Hierzu sind unterschiedliche Realisierungsformen einsetzbar, beispielsweise eine beliebige Art von Parser, mit dem die jeweilige Information extrahiert wird. Parser sind beispielsweise aus dem Dokument [4] bekannt.

Die Ordnungsmerkmale OM werden also zur Archivierung der Bilder verwendet.

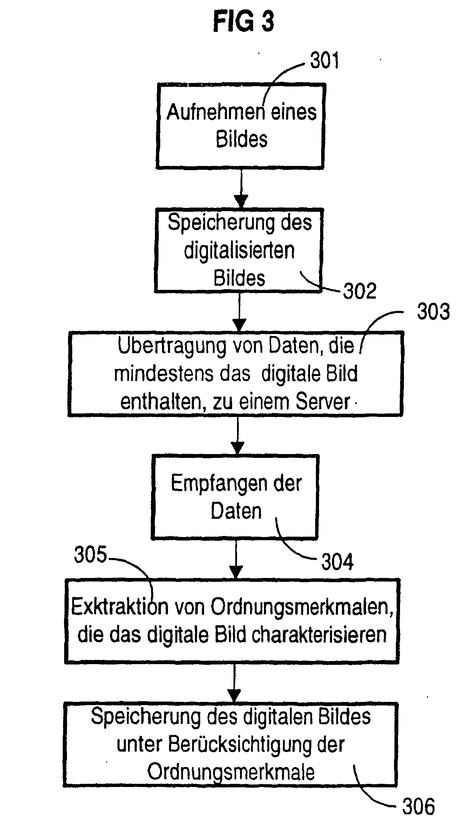

In Fig. 3 ist in einem Ablaufdiagramm das Verfahren in seinen einzelnen Verfahrensschritten dargestellt. Mit der digitalen Bildaufnahmeeinheit, die in der Telefoneinheit TE integriert ist, werden Bilder in einem ersten Schritt 301 aufgenommen. Die Bilder werden in digitaler Form als digitale Bilder in dem Telefonspeicher TS abgespeichert 302. Die Bilder werden in komprimierter oder auch in unkomprimierter Form von der Telefoneinheit TE über das Übertragungssystem ÜS zu dem Server S übertragen 303. Bei dem Server S werden die Daten empfangen 304 und aus den empfangenen Daten werden die Ordnungsmerkmale OM extrahiert, die die digitalen Bilder charakterisieren 305. Die digitalen Bilder und eventuell zusätzlich die Ordnungsmerkmale OM und weitere, die digitalen Bilder charakterisierende bzw. beschreibende Information werden in dem Server S abgespeichert 306, wobei bei der Speicherung die Ordnungsmerkmale OM berücksichtigt werden.

Ordnungsmerkmale OM können von dem Benutzer B vorgegeben werden, beispielsweise, wie im Zusammenhang mit dem Kommunikationssystem beschrieben, durch einfaches Einsprechen von Information in die Telefoneinheit TE oder auch durch Eingabe von Zeichenfolgen über die Tastatur TA.

In einer Weiterbildung des Verfahrens ist es vorgesehen, daß die eingesprochene Sprache erkannt wird und in komprimierter Form abgespeichert wird. Auf diese Weise wird eine weitere Reduktion der benötigten Übertragungsrate erreicht. Ferner ist es in einer Weiterbildung des Verfahrens vorgesehen, die Qualität des Bildes, das empfangen wurde, zu ermitteln und abhängig von der Qualität die benötigte bzw. zur Verfügung gestellte Übertragungsrate in dem Übertragungssystem ÜS, mit dem die Daten übertragen werden, zu steuern. Ferner ist es für den Fall, daß die Qualität des Bildes in dem Server S als zu gering eingestuft wird, von der Telefoneinheit TE eine Neuübermittlung des digitalen Bildes angefordert wird, wobei das neue Bild eine höhere Qualität, beispielsweise eine höhere Auflösung aufweisen soll.

Zur Ermittlung der Qualität eines Bildes wird beispielsweise in der Bildanalyseeinheit BAE das Rauschen, das in dem digitalen Bild enthalten ist, abgeschätzt. Das Rauschen dient als Maß zur Qualitätsabschätzung.

Die Erfindung kann vorteilhaft z.B. im Zusammenhang mit dem Internet eingesetzt werden. Die Bilder können z.B. in einer privaten oder öffentlichen Mailbox im Internet automatisch anhand der Ordnungsmerkmale gespeichert, d.h. archiviert werden. Es ist ferner in dieser Anwendung vorgesehen, ein aufgenommenes Bild über das Internet zu einem Server zu senden und direkt auf einer Seite des World Wide Webs (WWW) darzustellen.

In diesem Dokument wurden folgende Veröffentlichungen zitiert:
[1] Marktübersicht: Low-cost-Digitalkameras, Canon: Power Shot 600, MACup, S.100-101, Nr. 4, 1996
[2] Jenness et al, US Patent No. 5 260 989, Method and System for Enhanced Data Transmission in a Cellular Telephone System, 1992
[3] S.Takayoshi et al, Transmission System for Still-Picture TV Telephone, US Patent No. 5 063 587, 1990
[4] S. Naumann et al, Parsing, Teubner Verlag, Stuttgart, 1. Auflage, ISBN 3-519-02139-0, S. 155 - 166, 1994
[5] EP 0 624 968 A2, Image and audio communication system having graphical annotation capability
[6] DE 44 41 685 A1, Schaltungsanordnung zur Sprach-, Daten- und Bildkommunikation bei der Benutzung von Telefonanlagen
[7] WO 97/05738, Digital Camera System for Photographing Infants

## Patentansprüche

1. Kommunikationssystem zur Aufnahme und Verwaltung digitaler Bilder,
- bei dem mindestens eine Telefoneinheit (TE) vorgesehen ist, die mindestens folgende Komponenten aufweist:
-- eine digitale Bildaufnahmeeinheit zur Aufnahme von Bildern,
-- einen Telefonspeicher (RAM) zur Speicherung digitaler Bilder,
-- einen Prozessor (P), der mindestens zur Verarbeitung der digitalen Bilder verwendet wird,
-- Mittel zum Senden digitaler Bilder einschließlich diesen zugeordneter Ordnungsmerkmale über ein übertragungssystem,
- bei dem ein Server (S) vorgesehen ist, der mindestens folgende Komponenten aufweist:
-- eine Empfangseinheit (EE) zum Empfangen der von der Telefoneinheit (TE) gesendeten Daten,
-- eine Analyseeinheit (AE) zur Analyse der Daten bezüglich Ordnungsmerkmalen (OM), die die digitalen Bilder charakterisieren, und
-- einen Speicher (SP), in dem mindestens die digitalen Bilder archiviert werden, wobei bei der Archivierung die Ordnungsmerkmale (OM) berücksichtigt werden,
- bei dem ein mit der Telefoneinheit (TE) und mit dem Server gekoppeltes Übertragungssystem (ÜS) vorgesehen ist zur Übertragung von Daten, die mindestens die digitalen Bilder einschließlich der Ordnungsmerkmale aufweisen, von der Telefoneinheit (TE) zu dem Server (S),
**dadurch gekennzeichnet,**
**dass** die Ordnungsmerkmale (OM) mindestens die Telefonnummer der Telefoneinheit (TE) und/oder die Telefonnummer des Servers (S) enthalten.

2. Kommunikationssystem nach Anspruch 1,
bei dem die Telefoneinheit (TE) drahtlos mit dem Übertragungssystem (ÜS) gekoppelt ist.

3. Kommunikationssystem nach Anspruch 1 oder 2,
bei dem ein Mittel zur Zuordnung von vom Benutzer vorgebbaren Ordnungsmerkmalen (OM) vorgesehen ist, die den digitalen Bildern zugeordnet werden und die digitalen Bilder charakterisieren.

4. Kommunikationssystem nach einem der Ansprüche 1 bis 3,
bei dem eine Spracherkennungseinheit in der Telefoneinheit (TE) vorgesehen ist.

5. Kommunikationssystem nach einem der Ansprüche 1 bis 4,
bei dem die Ordnungsmerkmale (OM) mindestens Audiodaten (401) enthalten.

6. Kommunikationssystem nach Anspruch 5,
bei dem die Audiodaten in die Telefoneinheit (TE) eingesprochene Sprache (402) enthalten.

7. Kommunikationssystem nach einem der Ansprüche 1 bis 6,
bei dem die Ordnungsmerkmale (OM) mindestens das Datum und/oder die Uhrzeit der Bildaufnahme und/oder des Sendens der Daten enthalten.

8. Kommunikationssystem nach einem der Ansprüche 1 bis 7,
bei dem die Ordnungsmerkmale (OM) mindestens eine Angabe enthält, an welcher Stelle des Speichers (SP) die digitalen Bilder abgespeichert werden sollen.

9. Kommunikationssystem nach einem der Ansprüche 1 bis 8,
bei dem in dem Server (S) ein Datenbanksystem vorgesehen ist.

10. Kommunikationssystem nach einem der Ansprüche 1 bis 9,
bei dem in dem Server (S) eine Bildanalyseeinheit (BAE) zur Ermittlung der Qualität der digitalen Bilder vorgesehen ist.

11. Kommunikationssystem nach einem der Ansprüche 1 bis 10,
bei dem in dem Server (S) eine Steuereinheit (ST) vorgesehen ist zur Steuerung einer Auflösung der digitalen Bilder in der Telefoneinheit (TE) und/oder zur Steuerung einer bei der Übertragung in dem Übertragungssystem (ÜS) zu verwendenden Übertragungsrate für die Daten.

12. Kommunikationssystem nach einem der Ansprüche 1 bis 11,
bei dem in der Analyseeinheit (AE) ein Mittel zur Analyse von Sprachsignalen vorgesehen ist, aus denen Teile der Ordnungsmerkmale (OM) extrahiert werden.

13. Kommunikationssystem nach einem der Ansprüche 3 bis 12,
bei dem in dem Server (S) eine Sprachsytheseeinheit vorgesehen ist.

14. Kommunikationssystem nach einem der Ansprüche 1 bis 13,
bei dem der Server (S) über das Internet mit der mindestens einen Telefoneinheit (TE) verbunden ist.

15. Verfahren zur Aufnahme und Verwaltung digitaler Bilder,
- bei dem Bilder von einer digitalen Bildaufnahmeeinheit in einer Telefoneinheit (TE) aufgenommen werden (301),
- bei dem die Bilder in der Telefoneinheit in digitaler Form als digitale Bilder gespeichert werden (302),
- bei dem Daten, die mindestens die digitalen Bilder und diesen zugeordnete Ordnungsmerkmale enthalten, von der Telefoneinheit zu einem Server (S) übertragen werden (303),
- bei dem die Daten von dem Server (S) empfangen werden (304),
- bei dem im Server aus den Daten Ordnungsmerkmale (OM) extrahiert werden, die die digitalen Bilder charakterisieren (305), und
- bei dem die digitalen Bilder in dem Server (S) gespeichert werden (306), wobei bei der Speicherung die Ordnungsmerkmale (OM) berücksichtigt werden,
**dadurch gekennzeichnet,**
**dass** die Ordnungsmerkmale (OM) mindestens die Telefonnummer der Telefoneinheit und/oder die Telefonnummer des Servers (404) enthalten.

16. Verfahren nach Anspruch 15,
bei dem in der Telefoneinheit (TE) den digitalen Bildern vom Benutzer vorgebbare Ordnungsmerkmalen (OM) zugeordnet werden.

17. Verfahren nach Anspruch 15 oder 16,
bei dem in der Telefoneinheit (TE) in die Telefoneinheit (TE) eingesprochene Sprache erkannt wird und komprimiert abgespeichert wird.

18. Verfahren nach einem der Ansprüche 15 bis 17,
bei dem die Ordnungsmerkmale (OM) mindestens Audiodaten (401) enthalten.

19. Verfahren nach Anspruch 18,
bei dem die Audiodaten in die Telefoneinheit (TE) eingesprochene Sprache (402) enthalten.

20. Verfahren nach einem der Ansprüche 15 bis 19,
bei dem die Ordnungsmerkmale (OM) mindestens das Datum und/oder die Uhrzeit der Bildaufnahme und/oder des Sendens der Daten (403) enthalten.

21. Verfahren nach einem der Ansprüche 15 bis 20,
bei dem die Ordnungsmerkmale (OM) mindestens eine Angabe enthält, an welcher Stelle des Speichers die digitalen Bilder abgespeichert werden sollen (405).

## Claims

1. Communications system for receiving and managing digital images,
- in which at least one telephone unit (TE) is provided, which has at least the following components:
-- a digital image receiving unit for receiving images,
-- a telephone memory (RAM) for storing digital images,
-- a processor (P) which is used at least for processing the digital images,
-- means for transmitting digital images including organization features associated with them via a transmission system,
- in which a server (S) is provided, which has at least the following components:
-- a receiving unit (EE) for receiving the data sent from the telephone unit (TE),
-- an analysis unit (AE) for analysis of the data with respect to the organization features (OM) which characterize the digital images, and
-- a memory (SP) in which at least the digital images are archived, with the organization features (OM) being taken into account in the archiving process,
- in which a transmission system (ÜS) is provided, which is coupled to the telephone unit (TE) and to the server, for transmission of data, which has at least the digital images including the organization features, from the telephone unit (TE) to the server (S),
**characterized**
**in that** the organization features (OM) include at least the telephone number of the telephone unit (TE) and/or the telephone number of the server (S).

2. Communications system according to Claim 1,
in which the telephone unit (TE) is coupled to the transmission system (ÜS) without wires.

3. Communications system according to Claim 1 or 2,
in which means are provided for allocation of organization features (OM) which can be predetermined by the user, are associated with the digital images and characterize the digital images.

4. Communications system according to one of Claims 1 to 3, in which a speech recognition unit is provided in the telephone unit (TE).

5. Communications system according to one of Claims 1 to 4, in which the organization features (OM) include at least audio data (401).

6. Communications system according to Claim 5,
in which the audio data includes speech (402) spoken into the telephone unit (TE).

7. Communications system according to one of Claims 1 to 6, in which the organization features (OM) include at least the date and/or the time of reception of the image and/or the transmission of the data.

8. Communications system according to one of Claims 1 to 7,
in which the organization features (OM) include at least details about the point at which the digital images are intended to be stored in the memory (SP).

9. Communications system according to one of Claims 1 to 8, in which a databank system is provided in the server (S).

10. Communications system according to one of Claims 1 to 9, in which an image analysis unit (BAE) is provided in the server (S), in order to determine the quality of the digital images.

11. Communications system according to one of Claims 1 to 10,
in which a control unit (ST) is provided in the server (S) in order to control the resolution of the digital images in the telephone unit (TE), and/or in order to control a data transmission rate which is to be used for the transmission in the transmission system (ÜS).

12. Communications system according to one of Claims 1 to 11, in which means for analysis of speech signals, from which some of the organization features (OM) are extracted, are provided in the analysis unit (AE).

13. Communications system according to one of Claims 3 to 12, in which a speech synthesis unit is provided in the server (S).

14. Communications system according to one of Claims 1 to 13, in which the server (S) is connected to the at least one telephone unit (TE) via the Internet.

15. Method for receiving and managing digital images,
- in which images are received (301) by a digital image receiving unit in the telephone unit (TE),
- in which the images are stored as digital images in digital form in the telephone unit (302),
- in which data which includes at least the digital images and organization features associated with them is transmitted (303) from the telephone unit to a server (S).
- in which the data is received (304) by the server (S),
- in which organization features (OM) which characterize (305) the digital images are extracted from the data in the server, and
- in which the digital images are stored (306) in the server (S), with the organization features (OM) being taken into account in the storage process,
**characterized**
**in that** the organization features (ON) include at least the telephone number of the telephone unit and/or the telephone number of the server (404).

16. Method according to Claim 15,
in which organization features (OM) which can be predetermined by the user are associated with the digital images in the telephone unit (TE).

17. Method according to Claim 15 or 16,
in which speech which is spoken into the telephone unit (TE) is identified, and is stored in compressed form in the telephone unit (TE).

18. Method according to one of Claims 15 to 17,
in which the organization features (OM) include at least audio data (401).

19. Method according to Claim 18,
in which the audio data includes speech (402) which is spoken into the telephone unit (TE).

20. Method according to one of Claims 15 to 19,
in which the organization features (OM) include at least the date and/or the time of reception of the image and/or the transmission of the data.

21. Method according to one of Claims 15 to 20,
in which the organization features (OM) include at least details about the point at which the digital images are intended to be stored in the memory (405).

## Revendications

1. Système de communication pour la réception et la gestion d'images numériques,
dans lequel au moins une unité de téléphone (TE) est prévue qui présente au moins les composants suivants :
- une unité d'enregistrement numérique d'images pour l'enregistrement d'images,
-- une mémoire de téléphone (RAM) pour conserver les images numériques,
-- un processeur (P) qui est utilisé au moins pour le traitement des images numériques,
-- des moyens pour envoyer des images numériques, y compris les caractéristiques de rangement qui y sont associées, par l'intermédiaire d'un système de transmission,
- dans lequel un serveur (S) est prévu et contient au moins les composants suivants :
-- une unité de réception (EE) pour la réception des données envoyées par l'unité de téléphone (TE),
-- une unité d'analyse (AE) pour l'analyse des données qui concernent des caractéristiques de rangement (OM) qui **caractérisent** les images numériques, et
-- une mémoire (SP) dans laquelle au moins les images numériques sont archivées, l'archivage devant être conçu de manière à tenir compte de la caractéristique de rangement (OM),
- dans lequel un système de transmission (US) couplé à l'unité de téléphone (TE) et au serveur est prévu pour la transmission de données qui présentent au moins les images numériques, y compris les caractéristiques de rangement, de l'unité de téléphone (TE) au serveur (S),
**caractérisé en ce que**
les caractéristiques de rangement (OM) comprennent au moins le numéro de téléphone de l'unité de téléphone (TE) et/ou le numéro de téléphone du serveur (S).

2. Système de communication selon la revendication 1, dans lequel l'unité de téléphone (TE) est couplée sans fil au système de transmission (US).

3. Système de communication selon la revendication 1 ou 2, dans lequel est prévu un moyen pour associer des caractéristiques de rangement (OM) qui peuvent être prédéterminées par l'utilisateur et qui sont associées aux images numériques et qui **caractérisent** les images numériques.

4. Système de communication selon l'une des revendications 1 à 3, dans lequel une unité de reconnaissance vocale est prévue dans l'unité de téléphone (TE).

5. Système de communication selon l'une des revendications 1 à 4, dans lequel les caractéristiques de rangement (OM) comprennent au moins des données audio (401).

6. Système de communication selon la revendication 5, dans lequel les données audio comprennent des mots (402) prononcés dans l'unité de téléphone (TE).

7. Système de communication selon l'une des revendications 1 à 6, dans lequel les caractéristiques de rangement (OM) comprennent au moins la date ebou l'heure de l'enregistrement d'images et/ou de l'envoi d'une donnée.

8. Système de communication selon l'une des revendications 1 à 7, dans lequel les caractéristiques de rangement (OM) comprennent au moins une indication sur l'endroit de la mémoire (SP) où les images numériques doivent être conservées.

9. Système de communication selon l'une des revendications 1 à 8, dans lequel un système de base de données est prévu dans le serveur (S).

10. Système de communication selon l'une des revendications 1 à 9, dans lequel une unité d'analyse d'images (BAE) qui sert à déterminer la qualité des images numériques, est prévue dans le serveur (S).

11. Système de communication selon l'une des revendications 1 à 10, dans lequel une unité de commande (ST) pour la commande d'un déclenchement des images numériques dans l'unité de téléphone (TE) et/ou pour commander un taux de transfert des données utilisé pour la transmission dans le système de transmission (US) est prévue dans le serveur (S).

12. Système de communication selon l'une des revendications 1 à 11, dans lequel un moyen d'analyse des signaux vocaux, desquels des parties des caractéristiques de rangement (OM) sont extraites, est prévu dans l'unité d'analyse (AE) pour l'analyse de signaux vocaux.

13. Système de communication selon l'une des revendications 3 à 12, dans lequel une unité de synthèse vocale est prévue dans le serveur (S).

14. Système de communication selon l'une des revendications 1 à 13, dans lequel le serveur (S) est relié à l'au moins une unité de téléphone (TE) par l'intermédiaire de l'Internet.

15. Procédé pour la réception et la gestion d'images numériques,
- dans lequel des images peuvent être enregistrées (301) par une unité d'enregistrement numérique d'images dans une unité de téléphone (TE),
- dans lequel les images sont conservées (302) dans l'unité de téléphone sous forme numérique, comme images numériques,
- dans lequel des données qui comprennent au moins les images numériques et des caractéristiques de rangement associées à ces dernières sont transmises (303) à un serveur (S) par l'unité de téléphone,
- dans lequel les données sont reçues (304) par le serveur (S),
- dans lequel des caractéristiques de rangement (OM) sont extraites des données dans le serveur et **caractérisent** les images numériques (305), et
- dans lequel les images numériques sont conservées (306) dans le serveur (S), la mise en mémoire tenant compte des caractéristiques de rangement (OM),
**caractérisé en ce que**
les caractéristiques de rangement (OM) comprennent au moins le numéro de téléphone de l'unité de téléphone et/ou le numéro de téléphone du serveur (404).

16. Procédé selon la revendication 15, dans lequel des caractéristiques de rangement (OM) aptes à être prédéterminées par l'utilisateur sont associées aux images numériques dans l'unité de téléphone (TE).

17. Procédé selon la revendication 15 ou 16, dans lequel, dans l'unité de téléphone (TE), un mot prononcé est reconnu et est conservé sous forme comprimée.

18. Procédé selon l'une des revendications 15 à 17, dans lequel les caractéristiques de rangement (OM) comprennent au moins des données audio (401).

19. Procédé selon la revendication 18, dans lequel les données audio comprennent des mots (402) prononcés dans l'unité de téléphone (TE).

20. Procédé selon l'une des revendications 15 à 19, dans lequel les caractéristiques de rangement (OM) comprennent au moins la date et/ou l'heure de l'enregistrement de l'image et/ou de l'envoi des données (403).

21. Procédé selon l'une des revendications 15 à 20, dans lequel les caractéristiques de rangement (OM) comprennent au moins une indication sur l'endroit de la mémoire auquel les images numériques doivent être conservées (405).
